(19)

Europäisches Patentamt
European Patent Office
Office européen des brevets

(11) **EP 4 319 442 A1**

(12) **EUROPEAN PATENT APPLICATION**
published in accordance with Art. 153(4) EPC

(43) Date of publication:
**07.02.2024 Bulletin 2024/06**

(21) Application number: **21934957.8**

(22) Date of filing: **31.03.2021**

(51) International Patent Classification (IPC):
**H04W 74/08** (2024.01)

(52) Cooperative Patent Classification (CPC):
**H04W 74/08**

(86) International application number:
**PCT/JP2021/013985**

(87) International publication number:
**WO 2022/208792 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NTT DOCOMO, INC.
Tokyo 100-6150 (JP)**

(72) Inventors:
• **KURITA, Daisuke
  Tokyo 100-6150 (JP)**

• **HARADA, Hiroki
  Tokyo 100-6150 (JP)**
• **OKANO, Mayuko
  Tokyo 100-6150 (JP)**
• **NAGATA, Satoshi
  Tokyo 100-6150 (JP)**
• **OHARA, Tomoya
  Tokyo 100-6150 (JP)**
• **OKAMURA, Masaya
  Tokyo 100-6150 (JP)**

(74) Representative: **Hoffmann Eitle
Patent- und Rechtsanwälte PartmbB
Arabellastraße 30
81925 München (DE)**

(54) **TERMINAL, WIRELESS COMMUNICATION METHOD, AND BASE STATION**

(57) A terminal according to an aspect of the present disclosure includes: a receiving section that receives a downlink signal with at least a part of parameters of the downlink signal being limited, in an initial access procedure; and a control section that controls transmission of an uplink signal with at least a part of parameters of the uplink signal being limited, in the initial access procedure. According to an aspect of the present disclosure, the payload size for configuration of the initial access can be reduced.

FIG. 3

EP 4 319 442 A1

## Description

Technical Field

The present disclosure relates to a terminal, a radio communication method, and a base station in next-generation mobile communication systems.

Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

In an existing LTE system (for example, 3GPP Rel. 8 to Rel. 14), a user terminal (User Equipment (UE)) transmits uplink control information (UCI) by using at least one of a UL data channel (for example, Physical Uplink Shared Channel (PUSCH)) and a UL control channel (for example, Physical Uplink Control Channel (PUCCH)).

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Summary of Invention

Technical Problem

In NR (5G), it is possible to more flexibly configure design/parameters in accordance with a use case/required condition, and flexible configuration is also possible for a channel related to a random access (initial access). For the future radio communication systems (for example, 6G or later generations/Rel. 17 or later versions), higher required conditions and various use cases are expected, and thus further more flexible design is conceivable.

Meanwhile, depending on the required conditions/use cases, in some cases, the design/parameters limited/fixed to some extent may allow the more enhanced characteristics and the like to be expected. A case where the design/procedure of an initial access is fixed allows a payload size for configuration of the initial access to be reduced. This enhances communication connectivity at an area (cell) edge and/or availability of Internet of Things (IOT)/function limit terminals, allowing extreme coverage extension and extreme long-distance communication to be achieved.

Thus, an object of the present disclosure is to provide a terminal, a radio communication method, and a base station that can reduce a payload size for configuration of an initial access.

Solution to Problem

A terminal according to an aspect of the present disclosure includes: a receiving section that receives a downlink signal with at least a part of parameters of the downlink signal being limited, in an initial access procedure; and a control section that controls transmission of an uplink signal with at least a part of parameters of the uplink signal being limited, in the initial access procedure. Advantageous Effects of Invention

According to an aspect of the present disclosure, a payload size for configuration of the initial access can be reduced.

Brief Description of Drawings

[FIG. 1] FIGS. 1A and 1B are each a diagram to show an example of an initial access procedure.
[FIG. 2] FIG. 2 is a diagram to show another example of the initial access procedure.
[FIG. 3] FIG. 3 is a diagram to show a first example of a flexible region and a fixed region.
[FIG. 4] FIG. 4 is a diagram to show a second example of the flexible region and the fixed region.
[FIG. 5] FIG. 5 is a diagram to show an example of a schematic structure of a radio communication system according to one embodiment.
[FIG. 6] FIG. 6 is a diagram to show an example of a structure of a base station according to one embodiment.
[FIG. 7] FIG. 7 is a diagram to show an example of a structure of a user terminal according to one embodiment.
[FIG. 8] FIG. 8 is a diagram to show an example of a hardware structure of the base station and the user terminal according to one embodiment.

Description of Embodiments

(Initial Access Procedure)

In an initial access procedure, a random access procedure for establishing an uplink (UL) synchronization includes contention-based random access (also referred to as CBRA or the like) and non-contention-based random access (also referred to as Non-CBRA, contention-free random access (CFRA), or the like).

In the contention-based random access (CBRA), a UE transmits a preamble randomly selected from a plurality of preambles (also referred to as random access preambles, random access channels (Physical Random Access Channels (PRACHs)), RACH preambles, or the like) defined for each cell. The contention-based random access is a UE-initiated random access procedure, and can be used, for example, in an initial access, in start or resumption of UL transmission, and the like.

On the other hand, in the non-contention-based random access (Non-CBRA, CFRA), a network (e.g., base station) allocates a preamble in a UE-specific manner by using a downlink (DL) control channel (Physical Downlink Control Channel (PDCCH)), and the UE transmits the preamble allocated by the network. The non-contention-based random access is a network-initiated random access procedure, and can be used, for example, in a handover, in start or resumption of DL transmission (in start or resumption of transmission, in a UL, of retransmission indication information for the DL), and the like.

In NR, the CBRA includes 4-step CBRA procedure defined in Rel. 15 and 2-step CBRA procedure defined in Rel. 16. The former may be referred to as a 4-step RACH or the like, and the latter may be referred to as a 2-step RACH or the like.

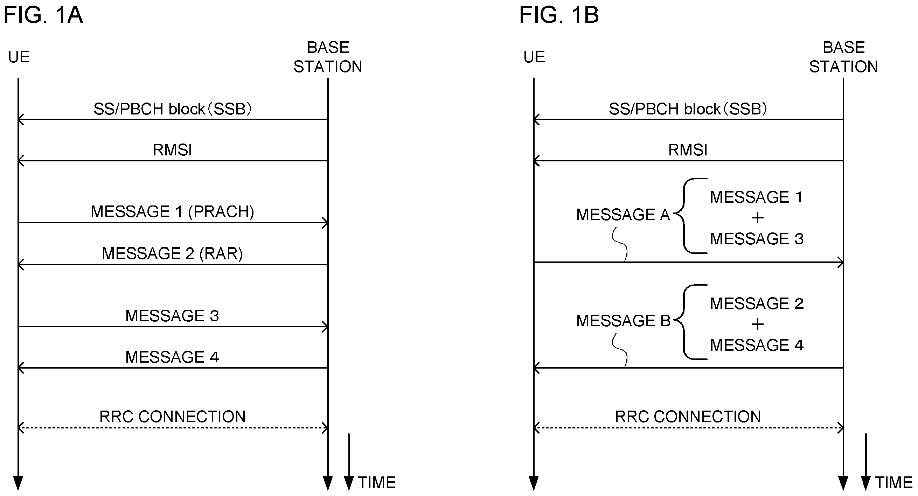

FIG. 1 is a diagram to show examples of an initial access procedure. The UE, first, receives information (PRACH configuration information) indicating a configuration of a random access channel (PRACH) (PRACH configuration, RACH configuration) in advance, by using at least one of pieces of system information (e.g., MIB (Mater Information Block) or SIB (System Information Block)) and/or higher layer signaling (e.g., RRC (Radio Resource Control) signaling).

In the present disclosure, the higher layer signaling may be, for example, any one or combinations of Radio Resource Control (RRC) signaling, Medium Access Control (MAC) signaling, broadcast information, and the like.

The MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the example of FIG. 1A, a UE, first, receives PRACH configuration information and minimum system information (Remaining Minimum System Information (RMSI)) in a synchronization signal block (SSB). The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

For example, the PRACH configuration information may include a plurality of physical cell IDs (PCIs) defined for respective cells, a plurality of preambles (e.g., preamble formats) defined for respective cells, and a time resource (e.g., system frame number, subframe number) to be used for the PRACH transmission and a frequency resource (e.g., an offset (prach-FrequencyOffset) indicating a starting position of six resource blocks (Physical Resource Blocks (PRBs))).

A monitoring position for a PDCCH may be notified on a PBCH, a resource for RMSI (RMSI PDSCH) may be notified on the PDCCH, and a resource to be used for a PRACH may be notified in the RMSI.

As shown in FIG. 1A, when a UE transitions from an idle (RRC_IDLE) state to an RRC connected (RRC_CONNECTED) state (e.g., in an initial access), when the UE is in the RRC connected state but without any UL synchronization established (e.g., in start or resumption of UL transmission), and the like, the UE randomly selects one from the plurality of preambles indicated in the PRACH configuration information and transmits the selected preamble on the PRACH (Message 1).

A base station detecting the preamble transmits, in response to the preamble, a random access response (RAR) (Message 2). In a case of failing in reception of the RAR within a certain period (RAR window) after the transmission of the preamble, the UE transmits (retransmits or re-transmits) the preamble again with the increased transmission power of the PRACH. Note that increasing the transmission power in the retransmission is also referred to as power ramping.

The UE receiving the RAR adjusts the transmission timing of a UL on the basis of a timing advance (TA) included in the RAR to establish the UL synchronization. The UE transmits, by using a UL resource specified by a UL grant included in the RAR, a control message for a higher layer (Layer 2/Layer 3 (L2/L3)) (Message 3). The control message includes an identifier of UE (UE-ID). The identifier of UE may be, for example, a C-RNTI (Cell-Radio Network Temporary Identifier) for the RRC connected state, or a UE-ID of a higher layer such as an S-TMSI (System Architecture Evolution-Temporary Mobile Subscriber Identity) for the idle state.

The base station transmits, in response to the control message for the higher layer, a contention resolution message (Message 4). The contention resolution message is transmitted based on addressing to an identifier of user terminal included in the control message. The user terminal having succeeded in detecting the contention resolution message transmits an acknowledgement (Acknowledge (ACK)) in an HARQ (Hybrid Automatic Repeat reQuest) to the network. Thus, the UE in the idle state transitions to the RRC connected state.

On the other hand, the UE having failed in detecting the contention resolution message determines a contention occurred, reselects the preamble, and repeats the random access procedure of Message 1 to Message 4. With the ACK from the user terminal, when the radio base station detects the contention resolved, the radio base station transmits a UL grant to the UE. The UE starts UL data by using the UL resource allocated by the UL grant.

In the contention-based random access as described above, the UE can start the random access procedure autonomously when desiring transmission of UL data. After the UL synchronization established, the UL data is transmitted by using the UL resource allocated in a manner specific to a user terminal by the UL grant, thus allowing highly reliable UL transmission. Message 1 to Message 4 in the initial access procedure may be referred to as the random access procedure.

Meanwhile, in NR Rel. 16, a random access procedure using steps fewer than the existing four steps is under study. One example may be a random access procedure using two steps. The random access procedure using two steps is also referred to as a 2-step random access procedure, two-step RACH or 2-step RACH.

The 2-step RACH may include a first step of performing transmission from a UE to a network and a second step of performing transmission from the network to the UE (see FIG. 1B).

For example, in the first step, at least one of a UL signal and UL channel including a preamble and message may be transmitted from the UE to the network (base station). The preamble may have a configuration for a role similar to Message 1 (PRACH) in the existing random access procedure. The message may have a configuration for a role similar to Message 3 (PUSCH) in the existing random access procedure. Note that the preamble and message transmitted in the first step may be referred to as Message A (Msg. A) or first message.

In the second step, at least one of a DL signal and DL channel including a response and contention-resolution may be transmitted from the network (base station) to the UE. The response may have a configuration for a role similar to Message 2 (the random access response (RAR) transmitted on the PDSCH) in the existing random access procedure. The contention-resolution may have a role similar to Message 4 (PDSCH) in the existing random access procedure. Note that the message transmitted in the second step may be referred to as Message B (Msg. B) or second message.

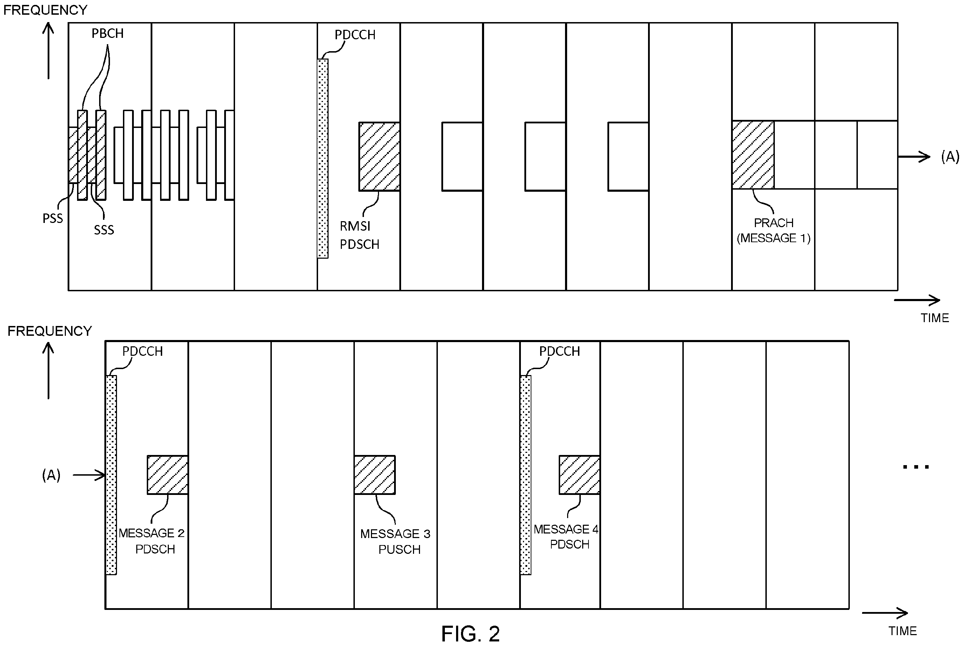

FIG. 2 is a diagram to show another example of the initial access procedure. FIG. 2 shows allocation of channels/information in time/frequency resources. The process flow of the initial access procedure is similar to that in FIG. 1A, and thus the detailed description is omitted. The upper and lower diagrams in FIG. 2 are assumed to be connected at (A) part. The example in FIG. 2 shows that each signal/channel is received in one beam out of four beams. The blank blocks indicate blocks corresponding to other beams.

RMSI may be a PDSCH (RMSI PDSCH) carrying the RMSI. Message 2 may be a PDSCH (Message 2 PDSCH) carrying Message 2. Message 3 may be a PUSCH (Message 3 PUSCH) carrying Message 3. Message 4 may be a PDSCH (Message 4 PDSCH) carrying Message 4. The PDSCH carrying the RMSI/Message 2/Message 4 may be scheduled through a PDCCH.

In NR (5G), it is possible to more flexibly configure design/parameters in accordance with a use case/required condition, and flexible configuration is also possible for a channel related to a random access (initial access). For the future radio communication systems (for example, 6G or later generations/Rel. 17 or later versions), higher required conditions and various use cases are expected, and thus further more flexible design is conceivable.

Meanwhile, depending on the required conditions/use cases, in some cases, the design/parameters limited/fixed to some extent may allow the more enhanced characteristics and the like to be expected. A case where the design/procedure of an initial access is fixed allows the payload size for configuration of the initial access to be reduced. This enhances communication connectivity at an area (cell) edge and/or availability of IOT/function limit terminals, allowing extreme coverage extension and extreme long-distance communication to be achieved.

In this view point, the inventors of the present invention came up with the idea of a terminal that can reduce a payload size for configuration of an initial access.

Embodiments according to the present disclosure will be described in detail with reference to the drawings as follows. The radio communication methods according to respective embodiments may each be employed individually, or may be employed in combination. For example, any of the 4-step random access procedure and 2-step random access procedure described above may be combined with any of examples as below for application.

Note that in the present disclosure, "A/B" may be interpreted as "at least one of A and B."

In the present disclosure, the PDSCH, RMSI, RMSI PDSCH, Message 2, Message 2 PDSCH, Message 4, and Message 4 PDSCH may be interchangeably interpreted. The PUSCH, Message 3, and Message 3 PUSCH may be interchangeably interpreted. The RACH, PRACH, Message 1, random access preamble, and RACH preamble may be interchangeably interpreted.

In the present disclosure, fix(ed), limit(ed), and define(d) may be interchangeably interpreted. In the present disclosure, limiting may mean limiting to a specific value/parameter/range. The initial access, initial access procedure, random access, and random access procedure may be interchangeably interpreted. Defining may mean defining in a specification. In the present disclosure, design, structure, configuration, parameter, value, and configuration range may be interchangeably interpreted.

(Radio Communication Method)

In the present disclosure, a flexible region is assumed to be a region where a design/parameters related to an initial access procedure (e.g., random access procedure) can be flexibly configured/changed. A fixed region is assumed to be a region where at least a part of the design/parameters related to the initial access is limited/fixed/defined. Note that the fixed region may refer to a region where a condition for configuring/changing the design/parameters related to the initial access is stricter than a condition for the flexible region. Each of the flexible region and the fixed region may be divided into a region for uplink signal and a region for downlink signal.

In other words, in the initial access procedure, the UE may receive a downlink signal with at least a part of parameters of the downlink signal being limited, and may control transmission of an uplink signal with at least a part of parameters of the uplink signal being limited.

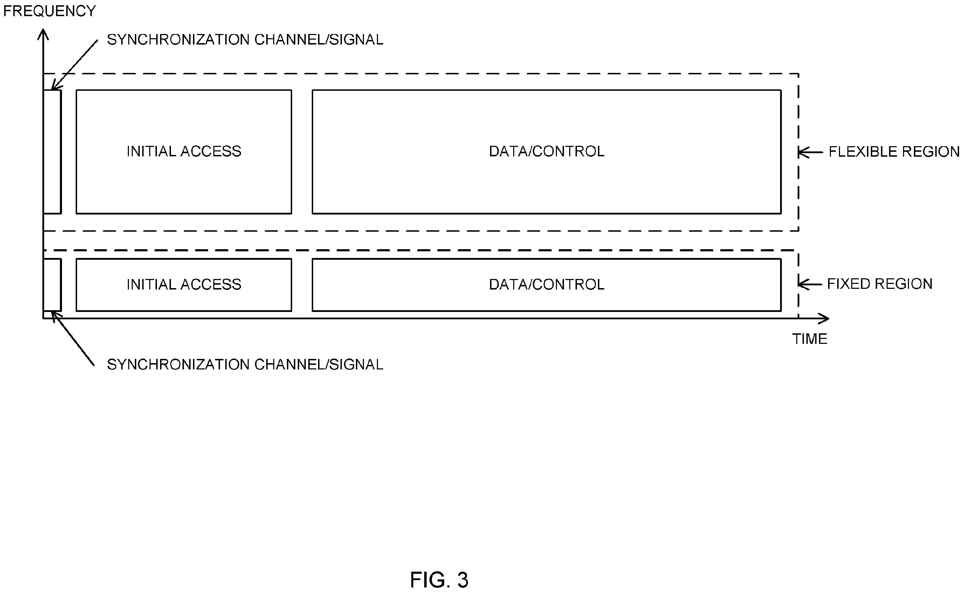

FIG. 3 is a diagram to show a first example of the flexible region and the fixed region. The "synchronization channel/signal" in FIG. 3 may be the SS/PBCH block (SSB) shown in FIGS. 1A and 1B. The "initial access" in FIG. 3 may mean the processes shown in FIGS. 1A, 1B, and 2. The "data" may be a PDSCH/PUSCH. The "control" may be a PDCCH/PUCCH.

In FIG. 3, the flexible region and the fixed region are present in different frequency domains. In FIG. 3, the flexible region is configured in a high frequency domain and the fixed region is configured in a low frequency domain, however, the flexible region may be configured in a low frequency domain and the fixed region may be configured in a high frequency domain. In FIG. 3, the flexible region and fixed region are both used in various communications (initial access, data/control). The UE may search a synchronization signal in any of the regions in accordance with the capability of the UE, the communication environment, and the like, and perform the initial access.

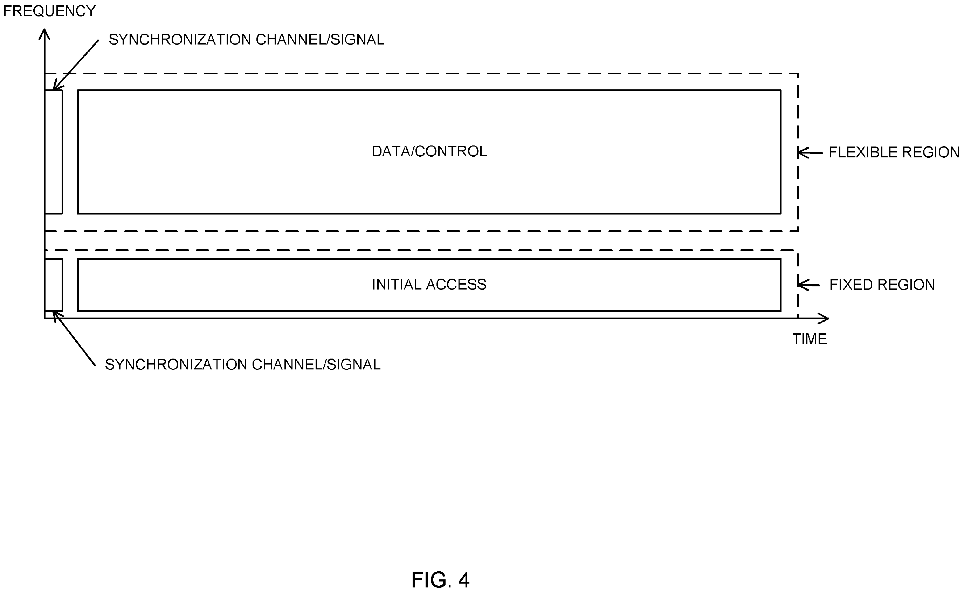

FIG. 4 is a diagram to show a second example of the flexible region and the fixed region. In FIG. 4, the description on the points similar to that of FIG. 3 is omitted. In FIG. 4, each of the flexible region and the fixed region is functionally in charge of a respective one of the various communications (initial access, data/control). In FIG. 4, the initial access is always performed in the fixed region, and the transmission/reception of the data/control is always performed in the flexible region. Note that the initial access may be always performed in the flexible region, and the transmission/reception of the data/control may be always performed in the fixed region.

FIGS. 3 and 4 each show an example in which the flexible region and the fixed region are present in different frequency domains, however, the flexible region and the fixed region may be present in different time domains or in different spaces (same frequency domain).

The flexible region and the fixed region may overlap with each other at least in a part. For example, the fixed region may be configured in a part of the flexible region.

For example, in the fixed region, the design/parameters/channel and the like related to the initial access may be limited. For example, a pattern of Subcarrier Spacing (SCS) and Time Division Duplex (TDD) may be limited in accordance with the frequency (e.g., in accordance with whether frequency range 1 (FR1) or FR2). In the fixed region, the frequency for a configurable channel raster may be limited. Alternatively, the frequency interval in which a channel raster is configurable may be limited (widened).

The UE may assume that reception of the SSB/RMSI after the RRC connection is to be transmitted by using a region the same as that of the initial access. Alternatively, the UE may assume that reception of the SSB/RMSI after the RRC connection is to be transmitted by using a region different from that of the initial access. In this case, through higher layer signaling, a transmission condition for the SSB and the like may be notified/configured for the UE.

The UE may perform the random access procedure after the RRC connection by using a region the same as that of the initial access. Alternatively, the UE may perform the random access procedure after the RRC connection by using a region different from that of the initial access. In this case, through higher layer signaling, a condition for the random access procedure and the like may be notified/configured for the UE.

Regarding the SS/PBCH, PDCCH, PDSCH, RACH, and PUSCH transmitted/received in the initial access procedure, the limitation in the fixed region will be described below. The examples may be combined for application.

<SS/PBCH>

In the initial access procedure, the transmission periodicity of the SS/PBCH (SSB) may be limited to a specific periodicity (e.g., 20 msec). For example, the periodicity of an SSB in the initial access may be limited (e.g., defined in a specification) to a specific value, and a value for the transmission periodicity of an SSB after the RRC connection may be flexibly configured through higher layer signaling or the like.

The synchronization raster (sync raster/Synchronization Signal (SS) raster) as a frequency position to be searched in the initial access may be limited to a specific frequency (frequency range). For example, the frequency for a configurable synchronization raster may be limited. The frequency range (frequency interval) in which a synchronization raster is configurable may be limited (e.g., widened).

The SSB configuration of slots (the number of slots for one SSB) may be limited. For example, one SSB/one slot may be always used or one SSB/half-slot (1/2 slot) may be used.

The parameters/configuration range of the MIB may be limited. For example, the number of bits for PDCCH configuration information for SIB1 (pdcch-ConfigSIB1) in the MIB may be reduced/omitted, and the payload of PBCH may be reduced. The bits obtained by reducing/omitting the number of bits of pdcch-ConfigSIB1 may be used for notification of other information. pdcch-ConfigSIB1 may be applied with the limitation, and/or the reduction in the amount of information, that will be described for the restriction on configuration related to the PDCCH as below.

<PDCCH>

In the initial access procedure, the configuration/parameters related to the PDCCH may be limited, compared to that of a PDCCH of an existing system or a PDCCH (PDCCH after the RRC connection) of other than the initial access.

For example, at least one of the number of RBs for the PDCCH (the number of PRBs), the number of symbols, and the offset of the PDCCH and SSB may be limited. For example, the number of PRBs for the PDCCH may be limited to a first value (e.g., 48 PRBs), the number of symbols may be limited to a second value (e.g., two symbols), the offset of the PDCCH and SSB may be limited to a third value (e.g., zero or two). In accordance with these limitations, the amount of information of controlResourceSetZero (CORESET) in *pdcch-ConfigSIB1* may be reduced (e.g., from four bits to one bit). A table indicating the configuration with these limitations may be defined in a specification.

A parameter (O) corresponding to the first symbol of the PDCCH may be limited (e.g., zero). The number of search space sets for each slot may be limited to a specific value (e.g., one). An index (First symbol index) of the first symbol of the PDCCH may be limited (e.g., zero). In accordance with these limitations, the amount of information of searchSpaceZero in *pdcch-ConfigSIB1* may be reduced (e.g., reduced from four bits to one bit). A table indicating the configuration with these limitations may be defined in a specification.

A position/range of a resource (time/frequency) for the PDCCH may be uniquely defined. For example, the configuration content of pdcch-ConfigSIB1 may be uniquely defined. For example, the relative position of the PDCCH and SSB or the PSS/SSS (the number of slots/the number of symbols/the number of PRBs) may be defined.

<PDSCH>

In the initial access procedure, regarding the frequency/time resource for the PDSCH (PDSCH corresponding to (carrying) the RMSI/Message 2/Message 4) configured by a DCI, the configurable parameters may be limited, compared to a PDSCH of an existing system or a PDSCH (PDSCH after the RRC connection) other than that of the initial access.

Regarding the frequency resource for the PDSCH, Frequency Domain Resource Assignment/Allocation (FDRA) may be limited. For example, the starting position (starting PRB) of the PDSCH and/or the number of PRBs may be limited to a specific value. Alternatively, a grouping of PRBs (RBG) may be defined. For example, with a certain number of PRBs (e.g., four PRBs) as one group, the resource configuration may be made for each group. With these limitations, the amount of information in the FDRA field of the DCI can be reduced.

Regarding the time resource for the PDSCH, Time Domain Resource Assignment/Allocation (TDRA) of the DCI may be limited. For example, a parameter (dmrs-TypeA-Position) indicating the position of DM-RS may be limited (e.g., two or three). A mapping type (PDSCH mapping type) may be limited (e.g., Type A). A parameter (S) indicating the starting position (start symbol) of the PDSCH and a parameter (L) indicating the number of continuous symbols of the PDSCH may be limited (e.g., $S = 2$, $L = 12$). A table related to the TDRA of the PDSCH limited (e.g., PDSCH time domain resource allocation) may be defined in a specification. With this, the amount of information in the TDRA field of the DCI can be reduced.

A new DCI (DCI format) may be defined in which a parameter/configuration range is limited. The new DCI may be a DCI with at least one of the limitations related to the frequency/time resource for the PDSCH described above made. The new DCI may be a DCI with the payload size reduced, compared to DCI format 1_0 (DCI being CRS-scrambled with SI-RNTI) for allocating (scheduling) a PDSCH.

A time/frequency resource (position/range of the time/frequency resource) for the PDSCH (RMSI/Message 2/Message 4 PDSCH) may be uniquely defined. In this case, the FDRA/TDRA in the DCI may be omitted. A new DCI format may be defined in which the FDRA/TDRA is omitted. For example, the relative position of the PDSCH and SSB/PDCCH corresponding to the RMSI (the number of slots/the number of symbols/the number of PRBs) may be defined.

Note that the restriction/limitation on the frequency/time resource in the DCI may be applied only to a DCI corresponding to the RMSI (e.g., not applied to a DCI corresponding to the PDSCH in the random access). Alternatively, the restriction/limitation on the frequency/time resource in the DCI may be applied also to a DCI corresponding to the RMSI as well as to a DCI corresponding to the PDSCH (Message 2/Message 4) in the random access.

<RACH>

In the initial access procedure, regarding the frequency/time resource for the RACH (PRACH) transmission, the configurable parameters may be limited, compared to a RACH of an existing system or a RACH (RACH after the RRC connection) other than that of the initial access.

Regarding the frequency resource for the RACH, at least one of the starting position (starting PRB (msg1-FrequencyStart)) of the RACH and the number of PRBs may be limited to a specific value. Alternatively, a grouping of RACHs (RBG) may be defined. For example, with four PRBs as one group, the resource configuration may be made for each group.

Regarding the time resource for the RACH, for example, the periodicity of the RACH occasion may be limited (e.g., in Equation (1), x = 16, y = 1). $n_{SFN}$ is the number of system frames.

$$n_{SFN} \bmod x = y \ldots \quad (1)$$

The number of subframes/the number of slots may be limited (e.g., the number of subframes = 3, the number of slots = 7). With these limitations, the amount of information of PRACH configuration index (prach-ConfigurationIndex) may be reduced (reduced from eight bits to four bits). A table showing the correspondence between pieces of information (PRACH configuration index, x, y, the number of subframes/the number of slots) limited may be defined.

The RACH occasion may be uniquely defined. The configuration contents of a parameter (msg1-FrequencyStart) indicating a starting position (offset) in the frequency domain of the PRACH (Message 1) and a PRACH configuration index (prach-ConfigurationIndex) may be uniquely defined. In this case, the preamble format may be notified separately. A position of a time resource/frequency resource for the RACH occasion may be uniquely defined. For example, the relative position of the RACH occasion and SSB/PDCCH (the number of slots/the number of symbols/the number of PRBs) may be defined.

<PUSCH>

In the initial access procedure, regarding the frequency/time resource for the PUSCH (Message 3 PUSCH) configured by a DCI, the configurable parameters may be limited, compared to a PUSCH of an existing system or a PUSCH (PUSCH after the RRC connection) other than that of the initial access.

Regarding the frequency resource for the PUSCH, the FDRA may be limited. For example, at least one of the starting position (starting PRB) of the PUSCH and the number of PRBs may be limited to a specific value. Alternatively, a grouping of PRBs (RBG) may be defined. For example, with four PRBs as one group, the resource configuration may be made for each group. With these limitations, the amount of information in the FDRA field of the DCI can be reduced.

Regarding the time resource for the PUSCH, the TDRA in the DCI may be limited. For example, a mapping type (PUSCH mapping type) may be limited (e.g., Type A). An offset (K2) of a DCI and a PUSCH scheduled by the DCI may be limited (e.g., j). j is a parameter corresponding to a subcarrier spacing. j = 1 may be configured in a case of $\mu_{PUSCH}$ = 0 or 1 (subcarrier spacing = 15 or 30 kHz), j = 2 may be configured in a case of $\mu_{PUSCH}$ = 2 (subcarrier spacing = 60 kHz), and j = 3 may be configured in a case of $\mu_{PUSCH}$ = 3 (subcarrier spacing = 120 kHz) .

A parameter (S) indicating the starting position (start symbol) of the PUSCH and a parameter (L) indicating the number of continuous symbols of the PUSCH may be limited (e.g., S = 2, L = 12). A table related to the TDRA of the PUSCH limited may be defined in a specification. With this, the amount of information in the RAR (the TDRA field in the DCI) can be reduced (e.g., reduced from 27 bits to 17 bits).

A time/frequency resource (position/range of the time/frequency resource) for the PUSCH (Message 3 PUSCH) may be uniquely defined. In this case, the FDRA/TDRA in the DCI may be omitted. A new DCI format may be defined in which the FDRA/TDRA is omitted. For example, the relative position of the PUSCH and SSB/PRACH/RAR (the number of slots/the number of symbols/the number of PRBs) may be defined.

According to the example described above, the payload size for configuration of an initial access can be reduced. This enhances communication connectivity at an area (cell) edge and/or availability of IOT/function limit terminals, allowing extreme coverage extension and extreme long-distance communication to be achieved.

(Radio Communication System)

Hereinafter, a structure of a radio communication system according to one embodiment of the present disclosure will be described. In the radio communication system, the radio communication method according to each embodiment of the present disclosure described above may be used alone or may be used in combination for communication.

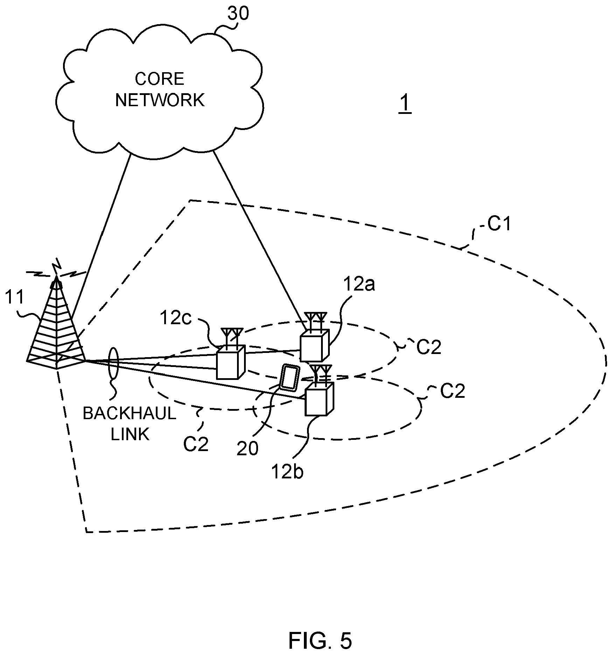

FIG. 5 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

(Base Station)

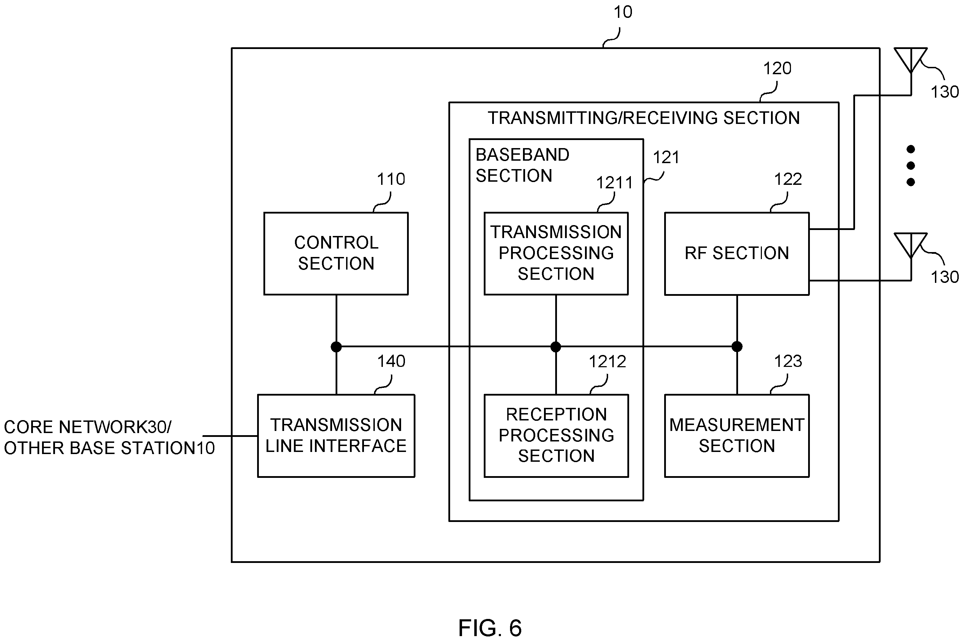

FIG. 6 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, demapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that, in an initial access procedure, the transmitting/receiving section 120 may transmit a downlink signal with at least a part of parameters of the downlink signal being limited. The downlink signal may include a synchronization signal block (SSB), and at least one of a transmission periodicity of the SSB, a synchronization raster of the SSB, a configuration of the SSB, and physical downlink control channel (PDCCH) configuration information in a master information block of the SSB may be limited. The downlink signal may include a physical downlink shared channel (PDSCH), and a parameter related to at least one of a frequency resource and a time resource for the PDSCH may be limited.

In the initial access procedure, the control section 110 may control reception of an uplink signal with at least a part of parameters of the uplink signal being limited. The uplink signal may include a random access channel (RACH) or a physical uplink shared channel (PUSCH), and a parameter related to at least one of a frequency resource and a time resource, for the RACH or the PUSCH, may be limited.

(User Terminal)

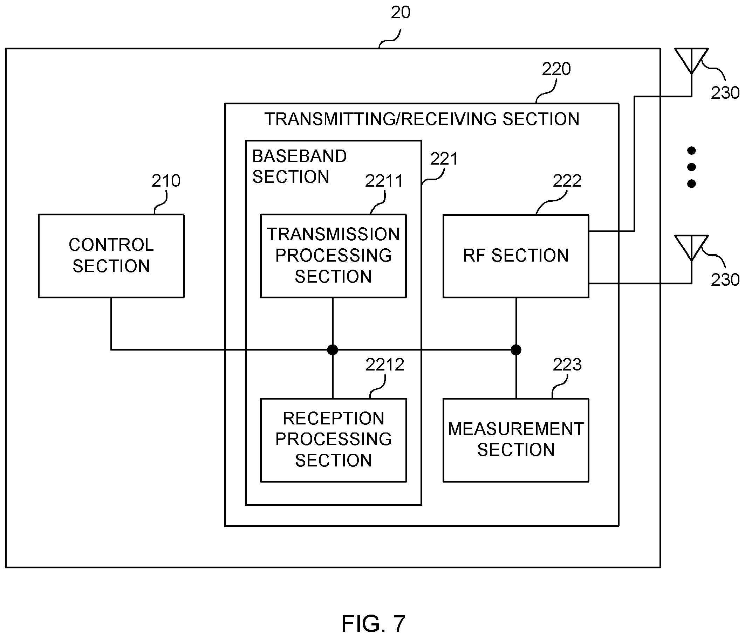

FIG. 7 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that, in an initial access procedure, the transmitting/receiving section 220 may receive a downlink signal with at least a part of parameters of the downlink signal being limited. The downlink signal may include a synchronization signal block (SSB), and at least one of a transmission periodicity of the SSB, a synchronization raster of the SSB, a configuration of the SSB, and physical downlink control channel (PDCCH) configuration information in a master information block of the SSB may be limited. The downlink signal may include a physical downlink shared channel (PDSCH), and a parameter related to at least one of a frequency resource and a time resource for the PDSCH may be limited.

In the initial access procedure, the control section 210 may control transmission of an uplink signal with at least a part of parameters of the uplink signal being limited. The uplink signal may include a random access channel (RACH) or a physical uplink shared channel (PUSCH), and a parameter related to at least one of a frequency resource and a time resource, for the RACH or the PUSCH, may be limited.

(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

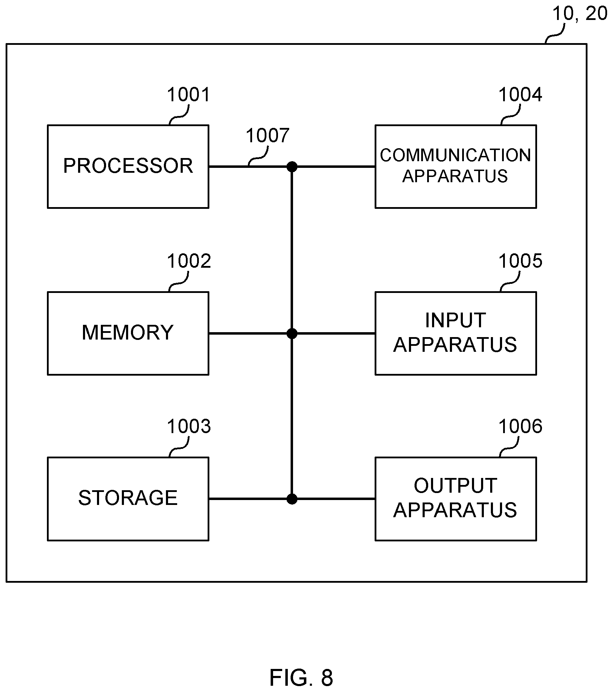

For example, a base station, a user terminal, and so on according to one embodiment of the present disclosure may function as a computer that executes the processes of the radio communication method of the present disclosure. FIG. 8 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

(Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Notifying of information is by no means limited to the aspects/embodiments described in the present disclosure, and other methods may be used as well. For example, notification of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be notified using, for example, MAC control elements (MAC CEs).

Also, notification of certain information (for example, notification of "being X") does not necessarily have to be notified explicitly, and can be notified implicitly (by, for example, not notifying this certain information or notifying another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a mobile body or a mobile body itself, and so on. The mobile body may be a vehicle (for example, a car, an airplane, and the like), may be a mobile body which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel, and the like may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

**Claims**

1. A terminal comprising:

   a receiving section that receives a downlink signal with at least a part of parameters of the downlink signal being limited, in an initial access procedure; and
   a control section that controls transmission of an uplink signal with at least a part of parameters of the uplink signal being limited, in the initial access procedure.

2. The terminal according to claim 1, wherein
   the downlink signal includes a synchronization signal block (SSB), and at least one of a transmission periodicity of the SSB, a synchronization raster of the SSB, a configuration of the SSB, and physical downlink control channel (PDCCH) configuration information in a master information block of the SSB is limited.

3. The terminal according to claim 1 or 2, wherein
   the downlink signal includes a physical downlink shared channel (PDSCH), and a parameter related to at least one of a frequency resource and a time resource for the PDSCH is limited.

4. The terminal according to any one of claims 1 to 3, wherein
   the uplink signal includes a random access channel (RACH) or a physical uplink shared channel (PUSCH), and a parameter related to at least one of a frequency resource and a time resource, for the RACH or the PUSCH, is limited.

5. A radio communication method for a terminal, the radio communication method comprising:

   receiving a downlink signal with at least a part of parameters of the downlink signal being limited, in an initial access procedure; and
   controlling transmission of an uplink signal with at least a part of parameters of the uplink signal being limited, in the initial access procedure.

6. A base station comprising:

   a transmitting section that transmits a downlink signal with at least a part of parameters of the downlink signal being limited, in an initial access procedure; and
   a control section that controls reception of an uplink signal with at least a part of parameters of the uplink signal being limited, in the initial access procedure.

FIG. 1B

UE — SS/PBCH block (SSB) — BASE STATION

RMSI

MESSAGE A { MESSAGE 1 + MESSAGE 3 }

MESSAGE B { MESSAGE 2 + MESSAGE 4 }

RRC CONNECTION

TIME

FIG. 1A

UE — SS/PBCH block (SSB) — BASE STATION

RMSI

MESSAGE 1 (PRACH)

MESSAGE 2 (RAR)

MESSAGE 3

MESSAGE 4

RRC CONNECTION

TIME

FIG. 2

FIG. 3

EP 4 319 442 A1

FREQUENCY

SYNCHRONIZATION CHANNEL/SIGNAL

DATA/CONTROL

FLEXIBLE REGION

INITIAL ACCESS

FIXED REGION

SYNCHRONIZATION CHANNEL/SIGNAL

TIME

FIG. 4

FIG. 5

FIG. 6

FIG. 7

EP 4 319 442 A1

10, 20

FIG. 8

## INTERNATIONAL SEARCH REPORT

International application No.

**PCT/JP2021/013985**

| A. | CLASSIFICATION OF SUBJECT MATTER |
|---|---|

*H04W 74/08*(2009.01)i
FI: H04W74/08

According to International Patent Classification (IPC) or to both national classification and IPC

| B. | FIELDS SEARCHED |
|---|---|

Minimum documentation searched (classification system followed by classification symbols)

H04W4/00-99/00

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2019/167842 A1 (NTT DOCOMO INC) 06 September 2019 (2019-09-06) paragraphs [0022], [0059]-[0068], fig. 11-12 | 1-2, 4-6 |
| A | | 3 |
| X | JP 2015-065603 A (NTT DOCOMO INC) 09 April 2015 (2015-04-09) paragraphs [0018], [0030], [0038]-[0056], [0072]-[0087], fig. 4-5, 8 | 1, 3-6 |
| A | | 2 |
| X | JP 2021-503240 A (NEC CORPORATION) 04 February 2021 (2021-02-04) paragraphs [0048], [0056]-[0064] | 1, 5-6 |
| A | | 2-4 |

☐ Further documents are listed in the continuation of Box C.    ☑ See patent family annex.

| | |
|---|---|
| *   Special categories of cited documents: | "T"   later document published after the international filing date or priority date and not in conflict with the application but cited to understand the principle or theory underlying the invention |
| "A"   document defining the general state of the art which is not considered to be of particular relevance | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | "&"   document member of the same patent family |
| "P"   document published prior to the international filing date but later than the priority date claimed | |

| Date of the actual completion of the international search | Date of mailing of the international search report |
|---|---|
| **02 November 2021** | **16 November 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
**Information on patent family members**

International application No.

**PCT/JP2021/013985**

| Patent document cited in search report | | | Publication date (day/month/year) | Patent family member(s) | | | Publication date (day/month/year) |
|---|---|---|---|---|---|---|---|
| WO | 2019/167842 | A1 | 06 September 2019 | US | 2021/0092775 | A1 | |
| | | | | paragraphs [0038], [0075]-[0084], fig. 11-12 | | | |
| | | | | EP | 3761729 | A1 | |
| JP | 2015-065603 | A | 09 April 2015 | US | 2016/0234865 | A1 | |
| | | | | paragraphs [0030], [0042], [0050]-[0070], [0093]-[0110], fig. 4-5, 8 | | | |
| | | | | WO | 2015/045959 | A1 | |
| | | | | EP | 3051915 | A1 | |
| | | | | CN | 105580483 | A | |
| JP | 2021-503240 | A | 04 February 2021 | US | 2020/0280985 | A1 | |
| | | | | paragraphs [0051], [0058]-[0065] | | | |
| | | | | WO | 2019/098019 | A1 | |
| | | | | EP | 3711410 | A1 | |
| | | | | CN | 111357358 | A | |

## REFERENCES CITED IN THE DESCRIPTION

**Non-patent literature cited in the description**

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0,* April 2010